**Europäisches Patentamt**

(19) **European Patent Office**

**Office européen des brevets**

(11) Veröffentlichungsnummer: **0 071 882**
**B1**

(12) **EUROPÄISCHE PATENTSCHRIFT**

(45) Veröffentlichungstag der Patentschrift:
**27.12.84**

(51) Int. Cl.³: **B 24 B 3/16**

(21) Anmeldenummer: **82106816.0**

(22) Anmeldetag: **28.07.82**

(54) **Tastfinger für eine Abtasteinrichtung einer Maschine zum automatischen Schärfen von Räumwerkzeugen.**

(30) Priorität: **08.08.81 DE 3131557**

(43) Veröffentlichungstag der Anmeldung:
**16.02.83 Patentblatt 83/7**

(45) Bekanntmachung des Hinweises auf die Patenterteilung:
**27.12.84 Patentblatt 84/52**

(84) Benannte Vertragsstaaten:
**AT BE CH DE FR GB IT LI NL SE**

(56) Entgegenhaltungen:
**CH - A - 305 803**
**US - A - 3 122 970**
**US - A - 3 985 048**

(73) Patentinhaber: **Oswald Forst Maschinenfabrik und Apparatebauanstalt GmbH, Schützenstrasse 160, D-5650 Solingen 1 (DE)**

(72) Erfinder: **Börner, Roland, Scheliberger Weg 43, D-5650 Solingen 1 (DE)**
Erfinder: **Hoistein, Herbert, Ing.grad., Felder Strasse 65, D-5650 Solingen 1 (DE)**
Erfinder: **Sennewaid, Jürgen, Unnersberg 92, D-5650 Solingen 1 (DE)**

(74) Vertreter: **Rau, Manfred, Dr. Dipl.-Ing. et al, Patentanwälte Rau & Schneck Königstrasse 2, D-8500 Nürnberg 1 (DE)**

## Beschreibung

Die Erfindung betrifft einen Tastfinger gemäss dem Oberbegriff des Anspruches 1.

Maschinen zum automatischen Schärfen von Räumwerkzeugen mit einer Abtasteinrichtung und mit einem Tastfinger der gattungsgemässen Art sind aus der US-PS Nr. 3646593 bekannt und auch handelsüblich. Bei diesen bekannten Maschinen fällt der Tastfinger bei einer entsprechenden Bewegung des Waagerechschlittens über die Schneide des zu schleifenden Räumzahns eines Räumwerkzeuges, wodurch der Waagerechtschlitten angehalten wird. Ausserdem erfolgt dann entsprechend der vertikalen Auslenkung des Tastfingers, der mit seiner waagerechten Tastfläche auf der Freifläche des Räumzahns aufliegt, eine Zustellbewegung des Senkrechtschlittens mit dem Schleifschlitten. Wenn auf diese Weise der Schleifschlitten mit einer Schleifspindel zugestellt ist, wird der Tastfinger aus seiner Taststellung am Räumzahn ausgehoben und die Schleifscheibe nach einer entsprechenden vorgegebenen Zustellung mehrfach über die zu schleifende Fläche geführt. Anschliessend erfolgt das Schleifen des nächsten Zahnes. Da an der verschlissenen, also zu schleifenden Schneide eines Räumzahns sehr oft sogenannte Verschleissmarken sind, die zu Fehlern beim Ermitteln der Istlage der Schneide mittels des Tastfingers führen, ist vor der ebenen Tastfläche eine Hinterschneidung angebracht, so dass die waagerechte Tastfläche bzw. deren vordere, durch die Hinterschneidung begrenzte , als Tastkante dienende Kante auf der Freifläche des Räumzahns mit einem Abstand von der Schneide aufliegt, in dem keine Verschleissmarken od. dgl. mehr vorhanden sind. Die Hinterschneidungsfläche, längs derer der Tastfinger über die verschlissene Schneide nach unten fällt, verläuft vertikal. Maschinen zum automatischen Schärfen von Räumwerkzeugen dieser Gattung haben sich in der Praxis in grossem Umfang bewährt und durchgesetzt.

In der Praxis hat sich gezeigt, dass sehr oft auch an der Spanfläche im Bereich der Schneide sogenannte Verschleissmarken vorhanden sind, die zu Fehlern beim Ermitteln der Sollage der Schneide führen. Des weiteren gilt insbesondere, dass die verschlissene Schneide ja keine scharfe Kante, sondern eine bogenförmig gekrümmte Fläche ist, so dass Fehler bei der Abtastung auftreten. Aus diesem Grunde ist es zweckmässig, nicht nur die Freifläche, sondern auch die Spanfläche in einem vorgegebenen Abstand von der ursprünglich vorhandenen Schneidkante abzutasten.

Aus der DE-OS Nr. 2926807 ist es hierzu bekannt geworden, zwei Tastfinger einzusetzen, von denen der eine die Freifläche abtastet, während der andere die Spanfläche abtastet. Diese Ausgestaltung mag funktionell zufriedenstellend sein; sie ist dadurch, dass zwei Tastfinger vorgesehen sein müssen, konstruktiv aufwendig und damit auch entsprechend empfindlich.

Der Erfindung liegt daher die Aufgabe zugrunde, einen Tastfinger der gattungsgemässen Art so auszugestalten, dass eine Abtastung der Spanfläche in einem Abstand von der ursprünglichen Schneidkante möglich ist.

Diese Aufgabe wird erfindungsgemäss durch die kennzeichnenden Merkmale des Anspruches 1 gelöst. Mit den erfindungsgemässen Massnahmen wird in verblüffend einfacher Weise erreicht, dass eine untere Messkante des Tastfingers gegen die Spanfläche zur Anlage kommt, so dass die ursprüngliche Lage der Schneidkante exakt erfasst wird. Da der Tastfinger exakt in einem Koordinatensystem vertikal und horizontal bewegt wird, können Messfehler nicht auftreten. Die Ausgestaltung des Tastfingers ermöglicht einen Betrieb im Rahmen einer sogenannten Messschleife, bei der die Lage der ursprünglichen Schneide ermittelt wird, anschliessend ein Nachschleifen erfolgt und dann eine erneute Messung und gegebenenfalls ein Korrekturschleifen vorgenommen wird.

Die Ansprüche 2 und 3 geben eine besonders vorteilhafte Ausgestaltung an.

Die Massnahmen nach Anspruch 4 ermöglichen eine besonders kurze Zeit für die exakte Messung der ursprünglichen Lage der Schneide.

Weitere Vorteile und Merkmale der Erfindung ergeben sich aus der nachfolgenden Beschreibung eines Ausführungsbeispiels anhand der Zeichnung. Es zeigen

Fig. 1 eine schematische Seitenansicht einer Maschine zum automatischen Schärfen von Räumwerkzeugen,

Fig. 2 eine Abtasteinrichtung in schematischer Darstellung mit einem Tastfinger nach der Erfindung,

Fig. 3 den unteren zur Anlage an einem Räumwerkzeug kommenden Teil des Tastfingers in stark vergrössertem Massstab,

Fig. 4 die Darstellung nach Fig. 3 mit einem Räumzahn in einer Vorpositionierstellung,

Fig. 5 die Darstellung nach Fig. 3 mit einem Räumzahn in einer Positionierstellung, und

Fig. 6 den unteren Teil eines abgewandelten Tastfingers.

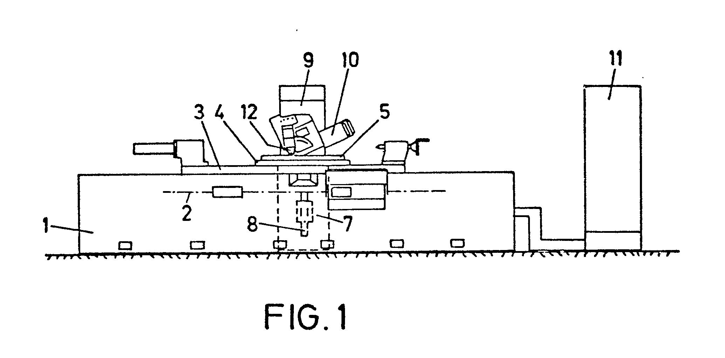

Wie aus Fig. 1 hervorgeht, weist eine automatische Räumwerkzeugschärfmaschine einen auf einem Maschinenbett 1 geführten und von einem im Maschinenbett 1 angeordneten, nicht sichtbaren Servomotor über eine Wälzspindel 2 angetriebenen Waagerechtschlitten 3 auf, der auf einer Magnetspanplatte 4 ein zu schärfendes Räumwerkzeug 5 trägt. Die Räumwerkzeugschärfmaschine weist weiterhin einen mit dem Maschinenbett 1 verbundenen Senkrechtschlitten 7 auf, der ebenfalls über eine Wälzspindel 8 von einem ebenfalls in der Zeichnung nicht sichtbaren Servomotor angetrieben wird. Er trägt am oberen Ende drehbar gelagert einen Schleifschlitten 9 mit einer oder mehreren Schleifspindeln 10. Der Schleifschlitten 9 ist auf dem Senkrechtschlitten 7 quer zum Waagerechtschlitten 3, also senkrecht zur Zeichnungsebene der Fig. 1, hin- und herbewegbar.

Weiterhin sind Schalt- bzw. Steuerschränke 11 vorgesehen, in denen die – vorprogrammierbaren – Steuereinrichtungen zur Ansteuerung der einzelnen Antriebsmotoren untergebracht sind.

Am vorderen Teil der Schleifspindel 10 ist eine Abtasteinrichtung 12 angeordnet, mittels derer die Geometrie des zu schleifenden Räumwerkzeuges 5 so erfasst wird, dass ein exaktes Nachschleifen möglich ist. Diese bisher beschriebene Räumwerkzeugschärfmaschine ist beispielsweise aus der US-PS Nr. 3646593 bekannt. Im übrigen ist diese Maschine handelsüblich.

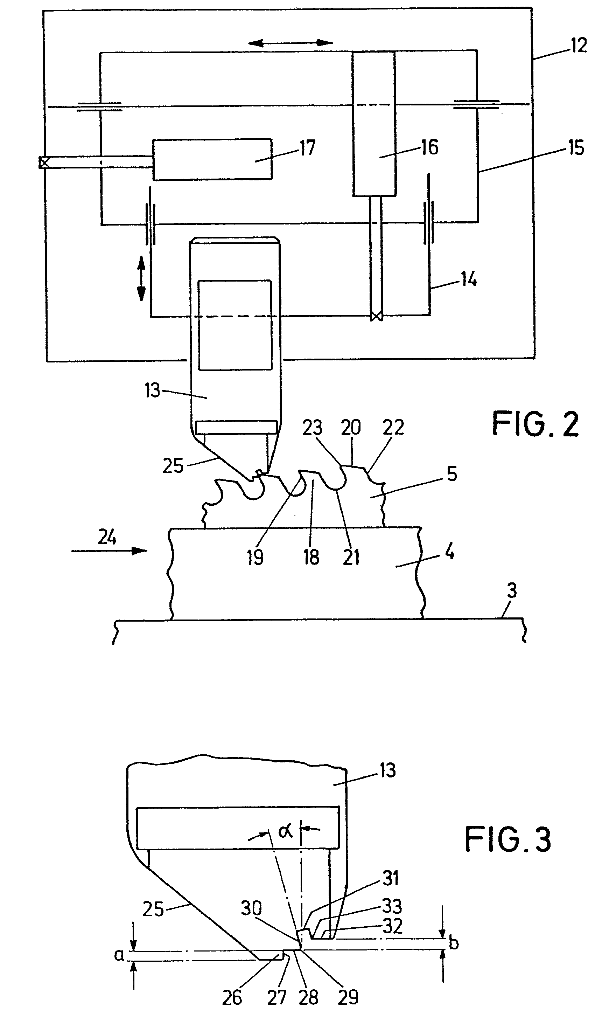

Die Abtasteinrichtung 12 ist schematisch in Fig. 2 dargestellt. Eine detaillierte Darstellung und Beschreibung ist in der Patentanmeldung EP-A Nr. 82.106815.2 enthalten. Hiernach weist die Abtasteinrichtung 12 einen Tastfinger 13 auf, der an einem vertikal verschiebbaren Schlitten 14 lösbar angebracht ist. Dieser vertikal verschiebbare Schlitten 14 ist in einem horizontal verschiebbaren Schlitten 15 gelagert, so dass der Tastfinger 13 exakte vertikale und horizontale, rechtwinklig zueinander verlaufende Bewegungen ausführen kann, und zwar in der Ebene, in der auch das auf dem Waagerechtschlitten 3 zum Schleifen befestigte Räumwerkzeug 5 angeordnet ist. Die beiden Schlitten 14, 15 sind jeweils mit analog oder digital arbeitenden Wegaufnehmern 16, 17 gekoppelt, so dass Bewegungen des Tastfingers 13 relativ zur Abtasteinrichtung 12 in elektrische Signale umgesetzt werden, die dann in den erwähnten Steuereinrichtungen in entsprechende Ansteuerungen für die einzelnen Antriebsmotoren umgesetzt werden.

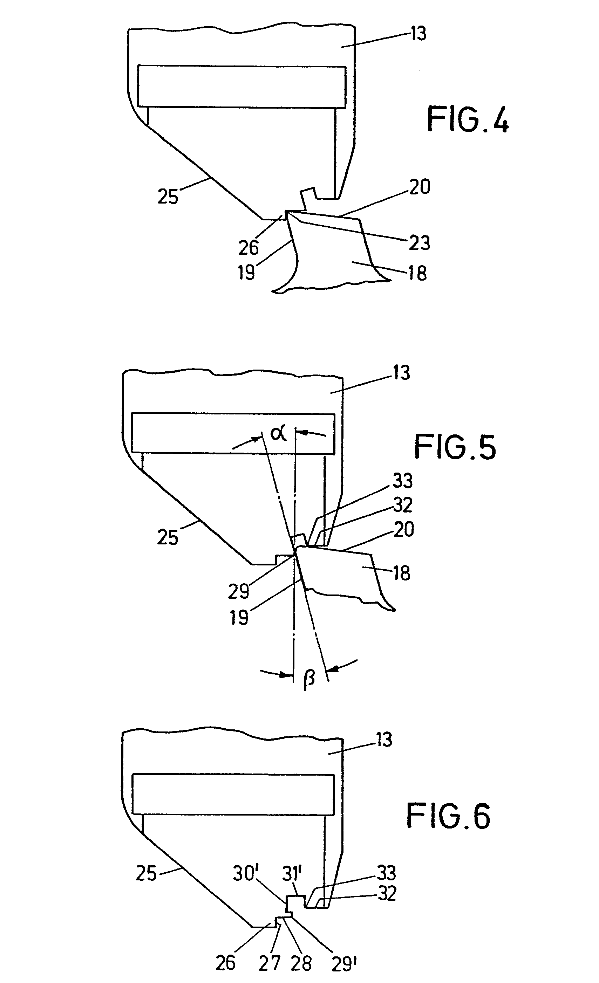

Das Räumwerkzeug 5 weist in üblicher Weise Räumzähne 18 auf, die jeweils eine Spanfläche 19 und eine Freifläche 20 aufweisen, wobei die Spanfläche 19 eines Räumzahns 18 in einen Spankammergrund 21 und von dort in den Zahnrücken 22 eines benachbarten Räumzahnes 18 übergeht, woran sich dessen Freifläche 20 anschliesst. Die Freifläche 20 und die Spanfläche 19 bilden an ihrer Durchdringungslinie die Schneide, die beim Räumen verschlissen wird und — wie insbesondere aus den Fig. 4 und 5 hervorgeht — nach einer bestimmten Betriebszeit nicht mehr scharfkantig, sondern abgerundet ist.

Beim Abtasten der jeweiligen Lage der Schneide 23 eines Räumzahnes 18 wird der Waagerechtschlitten 3 mit dem Räumwerkzeug 5 entsprechend dem Bewegungspfeil 24 — in den Zeichnungsfiguren also nach rechts — bewegt. Der Tastfinger 13 liegt hierbei mit einer Auflauffläche 25 zuerst gegen den Zahnrücken 22 und dann gegen die Freifläche 20 des entsprechenden Räumzahns 18 an. Während dieser Bewegung wird der Tastfinger 13 zusammen mit dem Schlitten 14 nach oben bewegt, was zu einer entsprechenden Abgabe von Signalen durch den Wegaufnehmer 16 führt. Diese Signale können entweder gespeichert werden oder in eine Folgebewegung des Senkrechtschlittens 7 durch entsprechende Ansteuerung seines Antriebsmotors umgesetzt werden.

Wenn eine sich an die Auflauffläche 25 anschliessende Vornase 26 die (verschlissene) Schneide 23 des entsprechenden Räumzahns 18 erreicht, dann fällt der Tastfinger 13 um eine kleine Wegstrecke a, die im Bereich von 0,4 bis 0,5 mm liegt, nach unten, wodurch aufgrund des entsprechenden Signals des Wegaufnehmers 16 der Antriebsmotor des Waagerechtschlittens 3 vom Schnellgang auf einen Schleichgang umgeschaltet wird. Diese Vornase 26 hat also die Funktion eines Vorsignalgebers. Diese Vornase 26 wird durch eine nach oben zurückspringende etwa vertikale Fläche 27 von der Länge a begrenzt, längs derer der Tastfinger 13 — wie erwähnt — nach unten fällt. Daran schliesst sich in der Bewegungsrichtung 24 eine kurze Anlagefläche 28 an, die nach Abfall der Vornase 26 über die Schneide 23 die Freifläche 20 mit ihrer höchsten Stelle anliegen lässt.

Bei der dann erfolgenden verlangsamten Weiterbewegung des Räumwerkzeugs 5 in Richtung 24 gelangt die (verschlissene) Schneide 23 des Räumzahns 18 zu einer Messkante 29 die an der Durchdringungslinie zwischen der Anlagefläche 28 und einer nach oben zurückspringenden Hinterschneidungsfläche 30 gebildet ist. Der Hinterschneidungs- also Neigungswinkel $\alpha$ zwischen einer Vertikalen und der Hinterschneidungsfläche 30 beträgt etwa 30° und ist auf jeden Fall grösser als der grösste übliche Spanwinkel $\beta$ zwischen einer Vertikalen und der Spanfläche 19 (s. Fig. 5). Diese Hinterschneidungsfläche 30 begrenzt gleichzeitig eine im Tastfinger 13 ausgearbeitete Hinterschneidung 31. An dieser Hinterschneidung 31 schliesst sich — in bekannter Weise — eine Tastfläche 32 an. Der vertikale Abstand b zwischen der Messkante 29 und der Tastfläche 32 ist auf jeden Fall grösser als die grösste vorkommende Abrundung der Schneide 23. Gleiches gilt für die leichte waagerechte Erstreckung der Hinterschneidung 31.

Wenn — bei der bereits erwähnten verlangsamten Weiterbewegung des Waagerechtschlittens in Richtung 24 — die Messkante 29 über die Schneide 23 des Räumzahns 18 bewegt wird, fällt der Tastfinger 13 nach unten. Durch ein entsprechendes Signal des Wegaufnehmers 16 wird der Antrieb des Waagerechtschlittens 3 gestoppt und anschliessend in umgekehrter Bewegungsrichtung, also entgegen dem Bewegungspfeil 24, wieder in Gang gesetzt, bis die Messkante 29 gegen die Spanfläche 19 zur Anlage kommt. Diese Anlage erfolgt aus den geschilderten Gründen auf jeden Fall unterhalb des abgerundeten verschlissenen Bereichs der Schneide 23. Durch die hierbei erfolgende Auslenkung des horizontal bewegbaren Schlittens 15 und des mit diesem gekoppelten Wegaufnehmers 17 wird ein Signal ausgelöst, das den Waagerechtschlitten 3 jetzt endgültig stoppt. Die waagerechte Tastfläche 32 bzw. deren vordere Tastkante 33, die am Übergang zur Hinterschneidung 31 gebildet ist, liegen auf der Freifläche 20 auf, und zwar ebenfalls in einem Bereich, der frei von der verschlissenen abgerundeten Schneide 23 ist. Über den Wegaufnehmer 16 wird eine Zustellung des Senkrechtschlittens 7 ausgelöst, bis der Abgleich des Wegaufnehmers erreicht ist. Damit ist die exakte Lage des Räumzahns 18 erfasst, so dass ein exaktes Nachschleifen der Spanfläche 19 und/oder der Freifläche 20 vorgenommen werden kann. Des weiteren kann nach dem Schleifen eine erneute Messung vorgenommen werden, um zu kontrollieren, ob das Sollmass der Schneide 23 mit dem ersten Schleifvorgang erreicht ist.

Bei der Ausgestaltung des Tastfingers nach Fig. 6 erstreckt sich die Hinterschneidung 31' unmittelbar oberhalb der Messkante 29' in Richtung auf die Vornase 26, so dass die eigentliche Hinterschneidungsfläche 30' nicht mehr zur Anlage an der Spanfläche eines Räumzahns kommt. Nachdem ansonsten alle Bereiche bzw. Merkmale des Tastfingers 13 unverändert geblieben sind, sind in Fig. 6 dieselben Bezugszeichen verwendet worden, ohne dass es einer erneuten Beschreibung bedarf.

**Patentansprüche**

1. Tastfinger (13) für eine Abtasteinrichtung (12) einer Maschine zum automatischen Schärfen von Freiflächen (20) und Spanflächen (19) aufweisenden Räumzähnen (18) an Räumwerkzeug (5), die einen Waagerechtschlitten (3) zur Aufnahme eines zu schleifenden Räumwerkzeugs (5) und einen mit mindestens einer Schleifspindel (10) versehenen Senkrechtschlitten (7) aufweist, wobei die Abtasteinrichtung (12) der Schleifspindel (10) zugeordnet ist und wobei der Tastfinger (13) relativ zur Abtasteinrichtung (12) bewegbar und mit mindestens einem wegabhängig Signale zur Ansteuerung von Antrieben der Schlitten abgebenden Glied gekoppelt ist, und wobei weiterhin der Tastfinger (13) eine horizontale, durch eine Hinterschneidung begrenzte Tastfläche (32) bzw. Tastkante (33) zur Auflage auf der Freifläche (20) eines Räumzahns (18) eines Räumwerkzeugs (5) und eine gegenüber der Tastfläche (32) bzw. Tastkante (33) nach unten gerichtete Fläche (30) zum Erfassen der Spanfläche (19) des Räumzahns (18) aufweist, dadurch gekennzeichnet, dass die Fläche (30) zum Erfassen der Spanfläche (19) des Räumzahns (18) in Arbeitsrichtung des Waagerechtschlittens (3) und unterhalb der horizontalen Tastfläche (32) bzw. Tastkante (33) hinterschnitten ist und dadurch eine Messkante (29, 29') zur Anlage an der Spanfläche (19) aufweist.

2. Tastfinger nach Anspruch 1, wobei die Fläche zum Erfassen der Spanfläche (19) als die Hinterschneidung begrenzende Hinterschneidungsfläche (30) ausgebildet ist, dadurch gekennzeichnet, dass die Hinterschneidungsfläche (30) gegenüber der Vertikalen stärker geneigt ist als die Spanfläche (19).

3. Tastfinger nach Anspruch 2, dadurch gekennzeichnet, dass die Hinterschneidungsfläche (30) in einem Winkel (α) von 20 bis 30° gegenüber der Vertikalen geneigt ist.

4. Tastfinger nach Anspruch 1, dadurch gekennzeichnet, dass der Messkante (29) ein Vorsignalgeber (Vornase 26) vorgeordnet ist.

**Claims**

1. Tracing finger (13) for a tracing device (12) of a machine for the automatic sharpening of broach teeth (18) having lands (20) and faces (19) on broaching tools (5), which tracing finger has a horizontal slide (3) for receiving a broaching tool (5) which is to be ground and a vertical slide (7) which is provided with at least one grinding spindle (10), the tracing device (12) being associated with the grinding spindle (10) and the tracing finger (13) being movable relative to the tracing device (12) and being connected to at least one element which transmits path-dependent signals for triggering the slide drives, and the tracing finger (13) further comprising a horizontal tracing surface (32) or tracing edge (33), limited by an undercut, for bearing on the land (20) of a broach tooth (18) of a broaching tool (5) and a surface (30), which is directed downwards relative to the tracing surface (32) or tracing edge (33), for detecting the face (19) of the broach tooth (18), characterized in that the surface (30) for detecting the face (19) of the broach tooth (18) is undercut in the working direction of the horizontal slide (3) and below the horizontal tracing surface (32) or tracing edge (33) and, because of this undercutting, has a measuring edge (29, 29') for bearing against the face (19).

2. Tracing finger according to Claim 1, the surface for detecting the face (19) being in the form of an undercut surface (30) which defines the undercut, characterized in that the undercut surface (30) is greatly more inclined relative to the vertical than the face (19).

3. Tracing finger according to Claim 2, characterized in that the undercut surface (30) is inclined at an angle (α) of 20 to 39° relative to the vertical.

4. Tracing finger according to Claim 1, characterized in that a pre-signal generator (a leading projection 26) is arranged ahead of the measuring edge (29).

**Revendications**

1. Doigt de palpage (13) pour un dispositif de palpage d'une machine pour l'affûtage automatique des dents (18) d'outil de brochage (5), présentant des faces de dépouille (20) et des surfaces de coupe (19), ladite machine comportant un chariot horizontal (3) pour la fixation d'une broche (5) à affûter, et un chariot vertical (7) muni d'au moins un axe d'affûtage (10), sur lequel le dispositif de palpage (12) de l'axe d'affûtage (10) est monté et le doigt de palpage (13) dudit dispositif de palpage (12) est mobile et couplé avec au moins un élément fournissant un signal de déplacement pour la commande des dispositifs d'entraînement des chariots, ledit doigt de palpage (13) étant par ailleurs pourvu d'une surface de palpage (32) horizontale, limitée par un dégagement, et un bord de palpage (33) destiné à reposer sur la face de dépouille (20) de ladite dent (18), ainsi qu'une surface (30) s'étendant vers le bas, en regard de la surface de palpage (32) et du bord de palpage (33), destinée à venir en contact avec la surface de coupe (19) de ladite dent (18), doigt de palpage caractérisé en ce que la surface (30) de contact avec la surface de coupe (19) de ladite dent (18) comprend un dégagement dans la direction de travail du chariot horizontal (3) et en contrebas de la surface de palpage (32) horizontale, et présente donc un bord de mesure (29, 29') destiné à venir en contact avec la surface de coupe (19).

2. Doigt de palpage selon la revendication 1, dans lequel la surface destinée à venir en contact avec la surface de coupe (19) est réalisée sous la forme de la surface (30) limitant un dégagement, caractérisé en ce que la surface de dégagement (30) est davantage inclinée par rapport à la verticale que la surface de coupe (19).

3. Doigt de palpage selon la revendication 2, caractérisé en ce que la surface de dégagement (30) est inclinée par rapport à la verticale d'un angle ($\alpha$) compris entre 20 et 30°.

4. Doigt de palpage selon la revendication 1, caractérisé en ce que le bord de mesure (29) est précédé d'un émetteur de signal préparatoire (bec avant 26).

FIG.1

FIG.2

FIG.3

FIG.4

13

25

20

26
19
23
18

FIG.5

13

α

25

33
32
20

29
19

18

β

FIG.6

13

25

30'  31'

33
32

26  27  28  29'

11